# EUROPEAN PATENT APPLICATION

(11) **EP 4 268 953 A1**
(43) Date of publication of application: **01.11.2023**
(21) Application number: 21910786.9
(22) Date of filing: 21.12.2021
(51) Int. Cl.: B01J 31/22, H01M 4/90, H01M 8/10, H01M 12/06, H01M 12/08

(54) **OXYGEN REDUCTION CATALYST AND SELECTION METHOD THEREOF, LIQUID COMPOSITION OR ELECTRODE CONTAINING OXYGEN REDUCTION CATALYST, AND AIR BATTERY OR FUEL CELL PROVIDED WITH ELECTRODE**

(30) Priority: 24.12.2020 JP 2020215460
(71) Applicant: Azul Energy Inc., Sendai-shi, Miyagi 980-0811 (JP)
(72) Inventor: ITO Koju, Sendai-shi, Miyagi 980-0811 (JP); NAKAMURA Koki, Sendai-shi, Miyagi 980-0811 (JP)
(74) Representative: Müller, Christian Stefan Gerd
(86) International application number: PCT/JP2021/047331
(87) International publication number: WO 2022/138644

(57) **Abstract**

Provided is an oxygen reduction catalyst having an excellent oxygen reduction catalytic activity and a selection method thereof, a liquid composition or electrode containing an oxygen reduction catalyst, and an air battery or fuel cell provided with the electrode. An oxygen reduction catalyst containing a metal complex and a conductive material and having an ionization potential value of 5.80 eV or lower and a selection method thereof, a liquid composition or electrode containing an oxygen reduction catalyst, and an air battery or fuel cell provided with electrode.

## Description

### [Technical Field]

The present invention relates to an oxygen reduction catalyst and a selection method thereof, a liquid composition or electrode containing an oxygen reduction catalyst, and an air battery or fuel cell provided with an electrode.

### [Background Art]

As devices that convert chemical energy to electrical energy using an oxidation-reduction reaction in electrodes, fuel cells and air batteries are known. In air electrodes of these batteries, a reduction reaction of oxygen occurs, and a catalyst is used to promote the reduction reaction. As a representative catalyst, a platinum-supported carbon material is known in the case of fuel cells, and a manganese dioxide-supported carbon material is known in the case of air batteries.

However, rare metals such as platinum are expensive and have limited resources, and thus attempts have been made to develop less expensive catalysts for which a material with a rich resource is used. For example, Patent Document 1 discloses an air electrode catalyst containing iron (II) phthalocyanine and a carbon material that is a promotor. However, iron (II) phthalocyanine is not easily adsorbed into the surface of the carbon material, and thus the oxygen-reducing efficiency is not sufficient.

Incidentally, Patent Document 2 discloses the use of graphene oxide as a carbon material, which is a promotor, in combination with iron (II) phthalocyanine. However, in a production method of an oxygen reduction catalyst disclosed in Patent Document 2, there is a need to form a composite of iron (II) phthalocyanine and graphene oxide temporarily and then reduce graphene oxide to obtain a composite of iron (II) phthalocyanine and graphene, which creates a problem in that the production steps become complicated.

Patent Document 3 discloses an oxidation-reduction electrode containing a cobalt tetrapyrazinoporphyrazine derivative represented by a specific structural formula as a catalyst component. However, in the cobalt tetrapyrazinoporphyrazine derivative described in Patent Document 3, a trifluoromethyl group bonds to pyrazine, and thus there is a concern that the oxygen reduction catalytic activity may deteriorate.

In addition, upon the use of metal complexes described in Patent Document 1 to 3 as an oxygen reduction catalyst by combining the metal complex with a promotor, how to combine the metal complex and the promotor is not clear until the oxygen-reducing efficiency is actually investigated, and efficient selection of oxygen reduction catalysts has not been possible.

### [Citation List]

### [Patent Document]

[Patent Document 1]
   Japanese Unexamined Patent Application, First Publication No. 2016-85925
[Patent Document 2]
   Japanese Unexamined Patent Application, First Publication No. 2014-91061
[Patent Document 3]
   PCT International Publication No. WO 2007/023964

### [Summary of Invention]

### [Technical Problem]

Therefore, there has been a demand for development of a catalyst having an excellent oxygen reduction catalytic activity without using rare metals such as platinum. In addition, there has been a demand for a simple method for selecting a catalyst having an excellent oxygen-reducing efficiency without investigating oxygen-reducing efficiency.

The present invention has been made to solve the above-described problems of the related art, and an object of the present invention is to provide an oxygen reduction catalyst having an excellent oxygen reduction catalytic activity and a selection method thereof, a liquid composition or electrode containing an oxygen reduction catalyst, and an air battery or fuel cell provided with the electrode.

### [Solution to Problem]

As a result of intensive studies regarding the above-described problems, the present inventors unexpectedly found that the use of a catalyst having a specific value of ionization potential makes the catalyst have an excellent oxygen reduction catalytic activity and reached the present invention. In particular, the present inventors found that, when a metal complex is used with a catalyst, the ionization potential value of the metal complex is not measured, and the ionization potential value of a catalyst produced by combining the metal complex and a conductive material or the like extremely well correlates with the oxygen reduction catalytic activity and completed the present invention.

The object of the present invention is achieved by an oxygen reduction catalyst containing a metal complex and a conductive material and having an ionization potential value of 5.80 eV or lower. Preferably, the oxygen reduction catalyst of the present invention has an ionization potential value of 4.80 eV or higher.

The metal complex is preferably represented by the following formula (1) or (2): 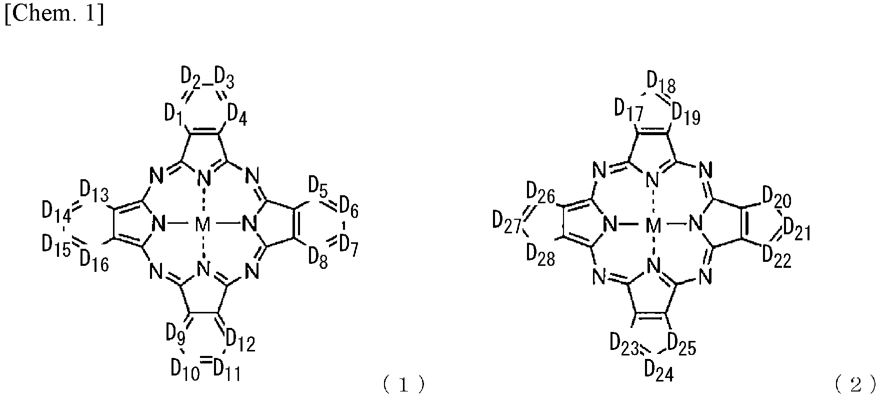 (in the formulae,
M is a metal atom,
D¹ to D²⁸ are each independently a nitrogen atom, a sulfur atom or a carbon atom, and,
in a case where D¹ to D²⁸ are carbon atoms, to each of the carbon atoms, a hydrogen atom, a halogen atom, an alkyl group, a cycloalkyl group, an alkenyl group, an alkynyl group, an aryl group, an alkylsulfonyl group, an alkoxy group or an alkylthio group may bond independently).

The M is preferably a manganese atom, an iron atom, a cobalt atom, a nickel atom, a copper atom or a zinc atom.

D¹ to D¹⁶ are preferably nitrogen atoms or carbon atoms, and D¹⁷ to D²⁸ are preferably sulfur atoms or carbon atoms.

The metal complex is preferably represented by the following formulae:

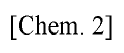

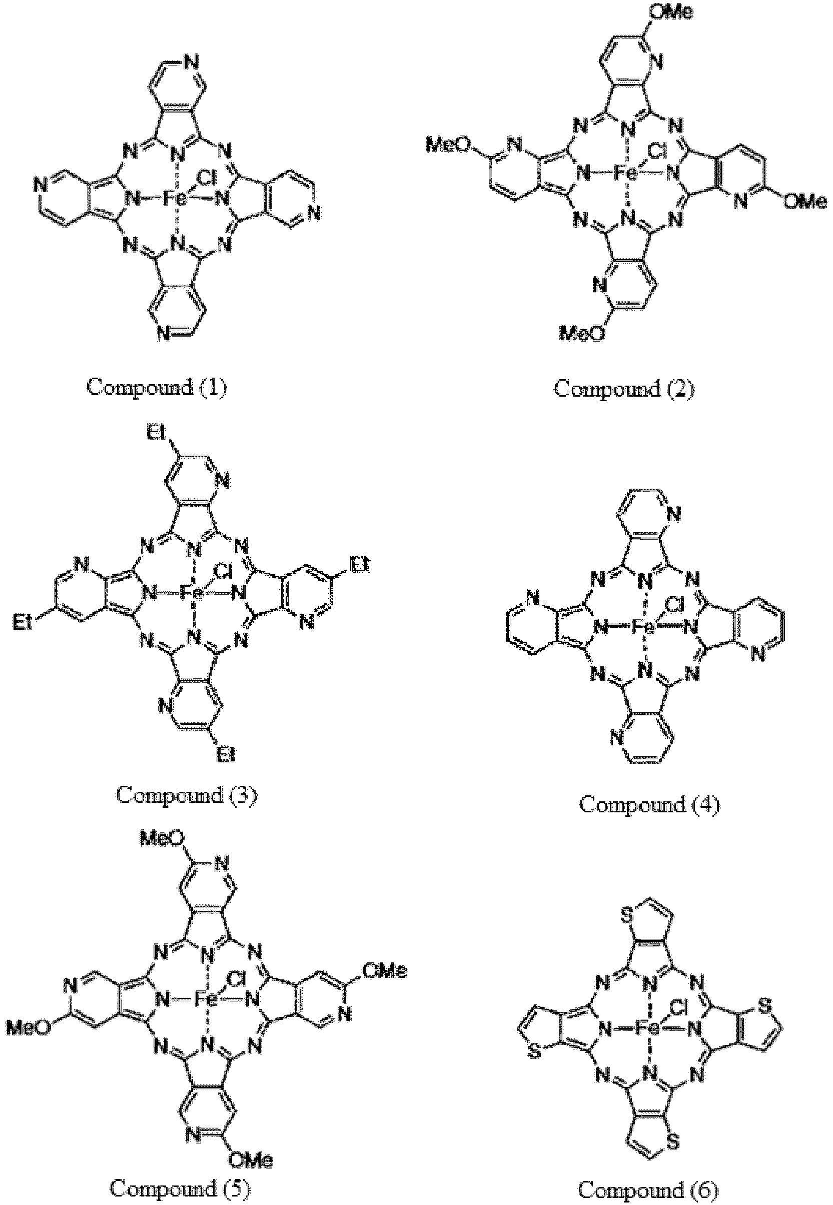

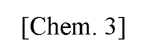

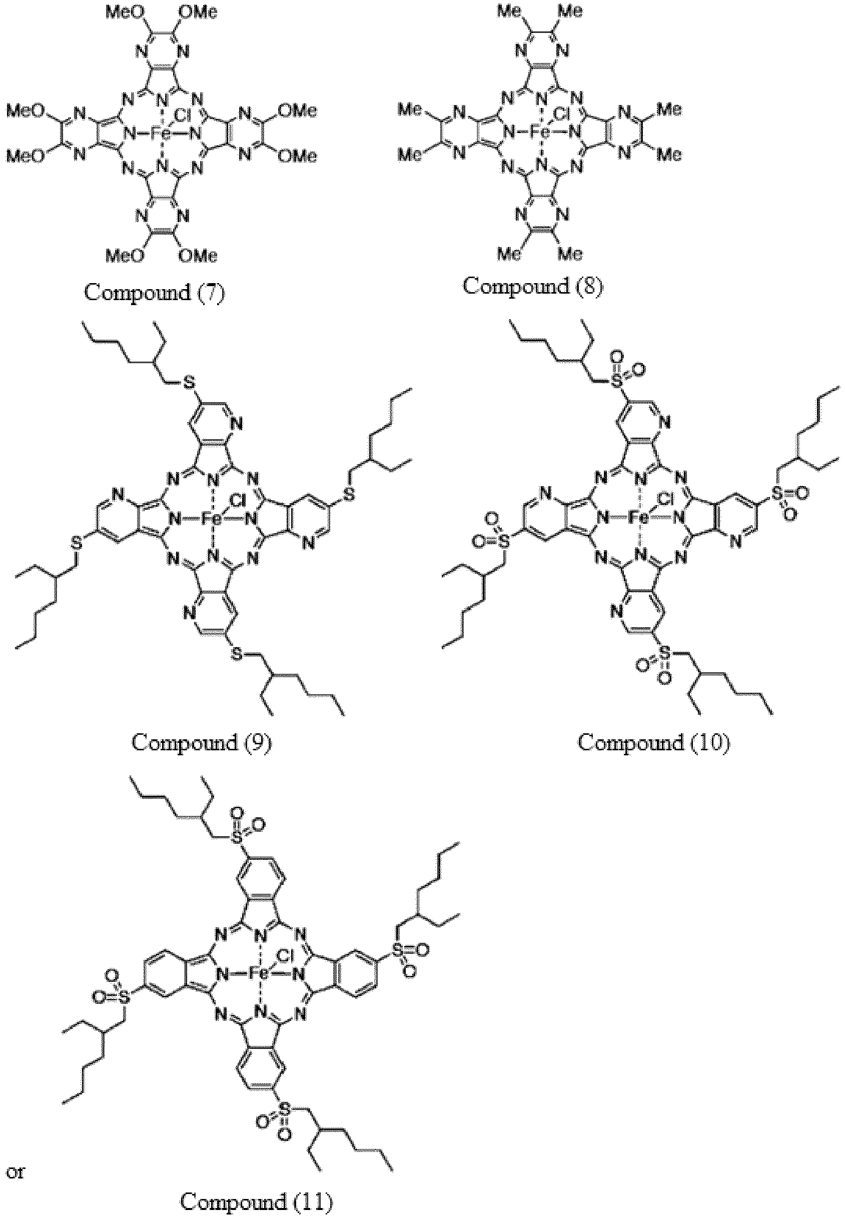

The metal complex is preferably contained in an amount of 75 mass% or less with respect to 100 mass% of a total amount of the metal complex and the conductive material.

The conductive material is preferably a carbon material.

The conductive material preferably contains a carboxyl group.

20 mass% or less of the carboxyl group is preferably contained in 100 mass% of the conductive material.

The present invention also relates to a liquid composition containing the oxygen reduction catalyst of the present invention and a solvent.

The present invention also relates to an electrode containing the oxygen reduction catalyst of the present invention.

The present invention also relates to an air battery or fuel cell provided with the electrode of the present invention.

Furthermore, the present invention also relates to a selection method of an oxygen reduction catalyst including a step of selecting a catalyst containing a metal complex and a conductive material and having an ionization potential value of 5.80 eV or lower by measuring an ionization potential value of the oxygen reduction catalyst.

### [Advantageous Effects of Invention]

According to the present invention, the use of the oxygen reduction catalyst of the present invention makes it possible to provide an excellent oxygen reduction catalytic activity. In addition, the oxygen reduction catalyst of the present invention makes it possible to appropriately select an excellent catalyst by investigating ionization potential values and thus makes it possible to easily select a catalyst suitable for oxygen reduction.

In addition, the present invention makes it possible to obtain an excellent oxygen reduction catalytic activity without using a rare metal such as platinum and thus makes it possible to provide an oxygen reduction catalyst for air batteries or fuel cells at a relatively low cost.

### [Brief Description of Drawing]

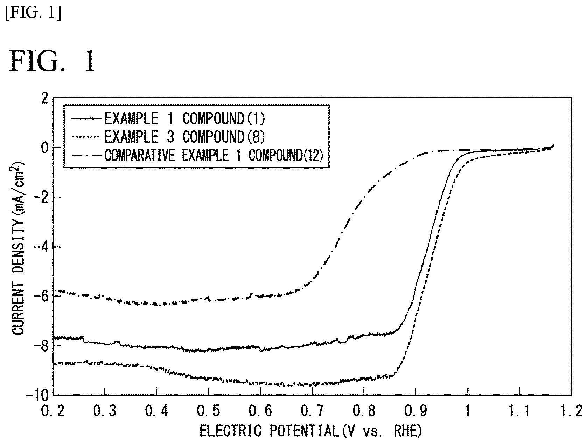

FIG. 1 shows a graph of results of LSV measurement performed on Examples 1, 3 and 7 and Comparative Examples 1 and 2 with RRDE.

### [Description of Embodiments]

### [Oxygen Reduction Catalyst]

The oxygen reduction catalyst of the present invention contains a metal complex and a conductive material and has an ionization potential value of 5.80 eV or lower. The ionization potential value of the oxygen reduction catalyst is preferably 4.50 eV or higher, more preferably 4.70 eV or higher and still more preferably 4.80 eV or higher. In addition, the ionization potential value of the oxygen reduction catalyst is preferably 5.40 eV or lower and more preferably 5.20 eV or lower. In a case where the ionization potential value is within the above-described range, the catalyst has a high oxygen-reducing efficiency.

A method for measuring the ionization potential value is not particularly limited, and the ionization potential value can be measured by irradiating the catalyst with ultraviolet rays and measuring photoelectrons emitted due to ionization. The ionization potential value can be measured in a vacuum or in the atmosphere and can be measured using, for example, photoemission yield spectroscopy in air (AC-1 to AC-5, manufactured by Riken Keiki Co., Ltd.). In addition, the ionization potential value can be also calculated by obtaining the oxidation potential by electrochemical measurement such as cyclic voltammetry in a solution and converting the oxidation potential using a material having a known ionization potential value.

The oxygen reduction catalyst of the present invention contains a metal complex and a conductive material. Only one kind of a metal complex can be used and two or more kinds of metal complexes can be used in combination. The metal complex preferably has an azaphthalocyanine skeleton and is more preferably represented by the following formula (1) or (2): 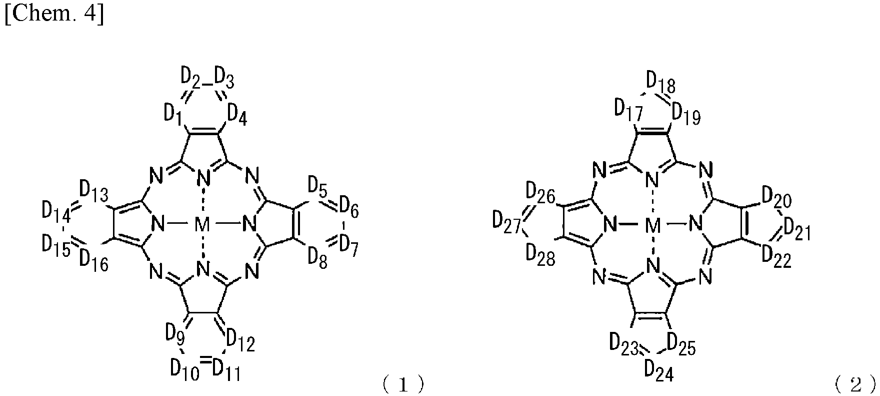 (in the formulae,
M is a metal atom,
D¹ to D²⁸ are each independently a nitrogen atom, a sulfur atom or a carbon atom, and,
in a case where D¹ to D²⁸ are carbon atoms, to each of the carbon atoms, a hydrogen atom, a halogen atom, an alkyl group, a cycloalkyl group, an alkenyl group, an alkynyl group, an aryl group, an alkylsulfonyl group, an alkoxy group or an alkylthio group may bond independently).

The bond between a nitrogen atom and M means the coordination of M with the nitrogen atom. To M, a halogen atom, a hydroxyl group or a hydrocarbon group having 1 to 8 carbon atoms may further bond as a ligand. In addition, an anionic counterion may be present in order for the metal complex to become electrically neutral.

The valence of M is not particularly limited. In order for the metal complex to become electrically neutral, a halogen atom, a hydroxyl group or an alkyloxy group having 1 to 8 carbon atoms may bond as a ligand (for example, axial ligand), and an anionic counterion may be present. As the anionic counterion, a halide ion, a hydroxide ion, a nitrate ion and a sulfate ion are exemplified. In addition, the structure of an alkyl group in the alkyloxy group having 1 to 8 carbon atoms may be linear, branched or cyclic.

As M, a scandium atom, a titanium atom, a vanadium atom, a chromium atom, a manganese atom, an iron atom, a cobalt atom, a nickel atom, a copper atom, a zinc atom, an yttrium atom, a zirconium atom, a niobium atom, a ruthenium atom, a rhodium atom, a palladium atom, a lanthanum atom, a cerium atom, a praseodymium atom, a neodymium atom, a promethium atom, a samarium atom, a europium atom, a gadolinium atom, a terbium atom, a dysprosium atom, a holmium atom, an erbium atom, a thulium atom, an ytterbium atom, a lutetium atom, an actinium atom, a thorium atom, a protactinium atom, a uranium atom, a neptunium atom, a plutonium atom, an americium atom, a curium atom, a berkelium atom, a californium atom, an einsteinium atom, a fermium atom, a mendelevium atom, a nobelium atom and a lawrencium atom are exemplified. Among these, M is preferably a manganese atom, an iron atom, a cobalt atom, a nickel atom, a copper atom or a zinc atom and more preferably an iron atom, a cobalt atom, a nickel atom or a copper atom.

Examples of the halogen atom in the present invention include fluorine, chlorine, bromine and iodine.

The alkyl group in the present invention represents a linear or branched monovalent hydrocarbon group. The number of carbon atoms in the alkyl group is preferably 1 to 20, more preferably 1 to 12 and still more preferably 1 to 6. As the alkyl group, a methyl group, an ethyl group, an n-propyl group, an isopropyl group, a n-butyl group, an isobutyl group, a sec-butyl group, a tert-butyl group, a n-pentyl group, an isopentyl group, a sec-pentyl group, a tert-pentyl group and a n-hexyl group are exemplified.

The cycloalkyl group in the present invention represents a cyclic monovalent hydrocarbon group. The number of carbon atoms of the cycloalkyl group is preferably 3 to 20, more preferably 3 to 12 and still more preferably 3 to 6. As the cycloalkyl group, a cyclopropyl group, a cyclobutyl group, a cyclopentyl group, a cyclohexyl group, a 1-methylcyclopropyl group, a 2-methylcyclopropyl group and a 2,2-dimethylcyclopropyl group are exemplified.

The alkenyl group in the present invention represents a linear or branched monovalent hydrocarbon group containing a double bond. The number of carbon atoms in the alkenyl group is preferably 2 to 20, more preferably 2 to 12 and still more preferably 2 to 6. As the alkenyl group, a vinyl group, a 1-propenyl group, a 2-propenyl group, a 1-butenyl group, a 2-butenyl group, a 3-butenyl group, a 1-methyl-2-propenyl group, a 2-methyl-2-propenyl group, a 1-pentenyl group, a 2-pentenyl group, a 3-pentenyl group, a 4-pentenyl group, a 1-methyl-2-butenyl group, a 2-methyl-2-butenyl group, a 1-hexenyl group, a 2-hexenyl group, a 3-hexenyl group, a 4-hexenyl group and a 5-hexenyl group are exemplified.

The alkynyl group in the present invention represents a linear or branched monovalent hydrocarbon group containing a triple bond. The number of carbon atoms in the alkynyl group is preferably 2 to 20, more preferably 2 to 12 and still more preferably 2 to 6. As the alkynyl group, an ethynyl group, a 1-propynyl group, a 2-propynyl group, a 1-butynyl group, a 2-butynyl group, a 3-butynyl group, a 1-methyl-2-propynyl group, a 2-methyl-3-butynyl group, a 1-pentynyl group, a 2-pentynyl group, a 3-pentynyl group, a 4-pentynyl group, a 1-methyl-2-butynyl group, a 2-methyl-3-pentynyl group, a 1-hexynyl group and a 1,1-dimethyl-2-butynyl group are exemplified.

The aryl group in the present invention represents a monovalent aromatic hydrocarbon group. The number of carbon atoms in the aryl group is preferably 6 to 40 and more preferably 6 to 30. As the aryl group, a phenyl group, a biphenyl group, a terphenyl group, a naphthyl group, a fluorenyl group, a benzofluorenyl group, a dibenzofluorenyl group, a phenanthryl group, an anthracenyl group, a benzophenanthryl group, a benzoanthracenyl group, a chrysenyl group, a pyrenyl group, a fluoranthenyl group, a triphenylenyl group, a benzofluoranthenyl group, a dibenzoanthracenyl group, a perylenyl group and a helicenyl group are exemplified.

The alkylsulfonyl group in the present invention represents a monovalent group in which an alkyl group bonds to a sulfonyl group. The alkyl group in the alkylsulfonyl group can be a group described as the above-described "alkyl group". The number of carbon atoms in the alkylsulfonyl group is preferably 1 to 20, more preferably 1 to 12 and still more preferably 1 to 6. A methylsulfonyl group, an ethylsulfonyl group, a normal propylsulfonyl group, an isopropylsulfonyl group, a n-butylsulfonyl group, a sec-butylsulfonyl group, a tert-butylsulfonyl group, a n-pentylsulfonyl group, an isopentylsulfonyl group, a tert-pentylsulfonyl group, a neopentylsulfonyl group, a 2,3-dimethylpropylsulfonyl group, a 1-ethylpropylsulfonyl group, a 1-methylbutylsulfonyl group, a n-hexylsulfonyl group, an isohexylsulfonyl group and a 1,1,2-trimethylpropyl sulfonyl group are exemplified.

The alkoxy group in the present invention represents a monovalent group to which a hydrocarbon group bonds through an ether bond. The number of carbon atoms in the alkoxy group is preferably 1 to 20, more preferably 1 to 12 and still more preferably 1 to 6. As the alkoxy group, a methoxy group, an ethoxy group, a n-propoxy group, a n-butoxy group, a n-pentyloxy group, a n-hexyloxy group, an isopropoxy group, an isobutoxy group, a sec-butoxy group, a tert-butoxy group and an isohexyloxy group are exemplified.

The alkylthio group in the present invention represents a group in which an oxygen atom in an ether bond of an alkoxy group is substituted by a sulfur atom. The number of carbon atoms in the alkylthio group is preferably 1 to 20, more preferably 1 to 16 and still more preferably 1 to 12. As the alkylthio group, a methylthio group, an ethylthio group, a n-propylthio group, a n-butylthio group, a n-pentylthio group, a n-hexylthio group and an isopropylthio group are exemplified.

The alkyl group, the cycloalkyl group, the alkenyl group, the alkynyl group, the aryl group, the alkylsulfonyl group, the alkoxy group and the alkylthio group may be an unsubstituted substituent, but may be each substituted by one or more substituents such as a halogen, an alkyl group, an alkenyl group, an alkynyl group, an aryl group, an alkoxy group, an alkylthio group, a cyano group, a carbonyl group, a carboxyl group, an amino group, a nitro group, a silyl group and a sulfo group.

D¹ to D¹⁶ are preferably nitrogen atoms or carbon atoms, and D¹⁷ to D²⁸ are preferably sulfur atoms or carbon atoms. The number of nitrogen atoms in D¹ to D¹⁶ is preferably 2 to 12 and more preferably 4 to 8. The number of sulfur atoms in D¹⁷ to D²⁸ is preferably 2 to 10 and more preferably 4 to 8.

Preferably, the metal complex is a compound represented by the following formulae.

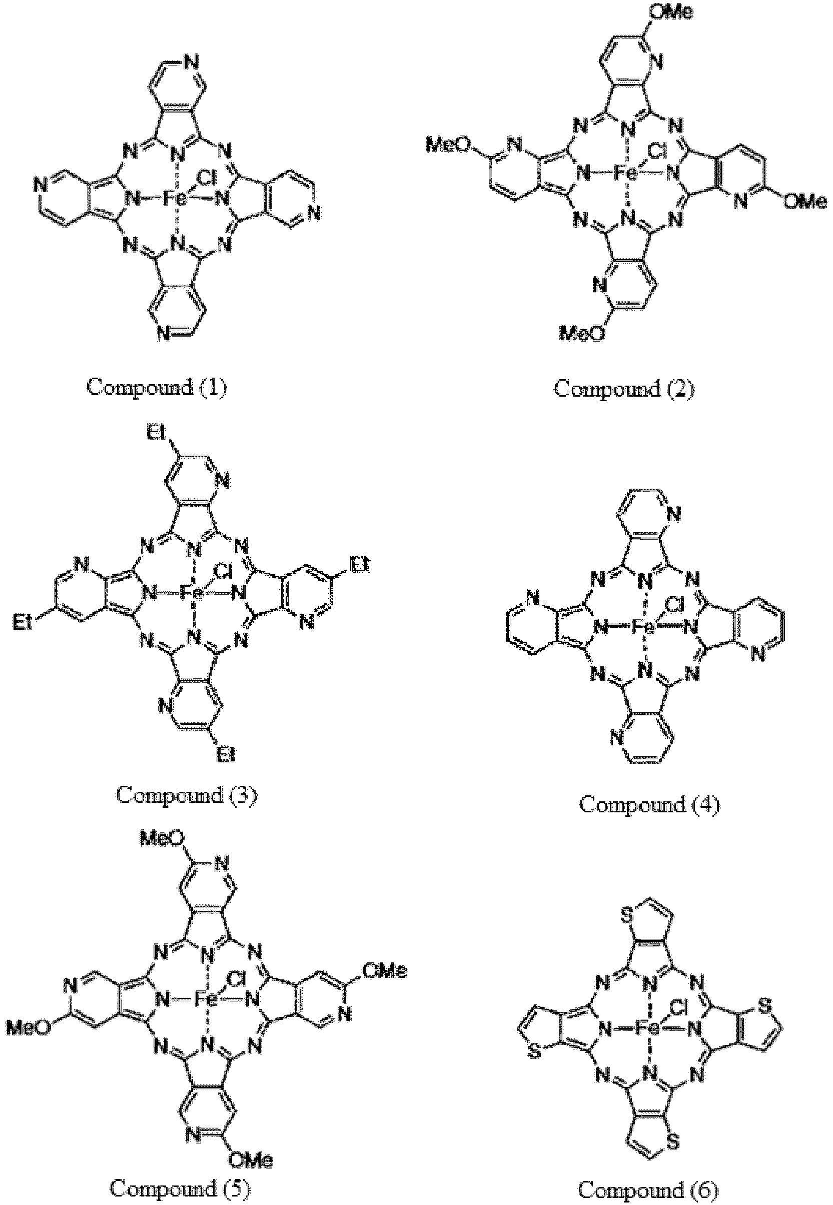

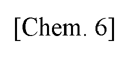

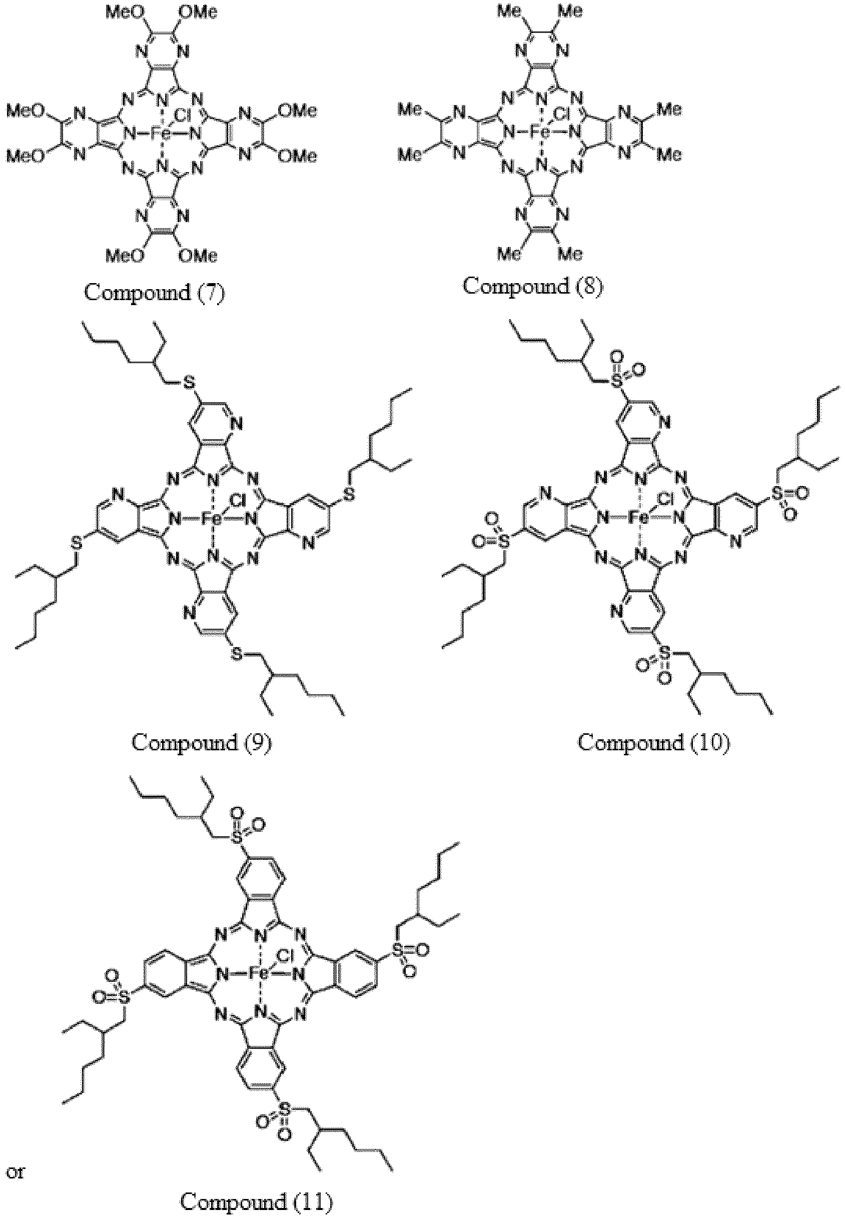

A production method of the metal complex is not particularly limited; however, for example, a method in which a dicyano compound such as pyridine-2,3-dicarbonitrile and a metal atom are heated in an alcohol solvent in the presence of a basic substance is exemplified. Here, as the basic substance, inorganic bases such as potassium carbonate, sodium carbonate, calcium carbonate, sodium bicarbonate and sodium acetate; organic bases such as triethylamine, tributylamine and diazabicycloundecene are exemplified.

The conductive material is not particularly limited as long as the conductive material has a conductive property, and examples thereof include a carbon material, a metallic material and a metal oxide material. As the conductive material, a carbon material is preferable. One kind of a conductive material may be used or two or more kinds of conductive materials may be jointly used.

The carbon material is preferably derived from conductive carbon. As specific examples of the carbon material, graphite, amorphous carbon, activated carbon, graphene, carbon black, carbon fibers, mesocarbon microbeads, microcapsule carbon, fullerenes, carbon nanoforms, carbon nanotubes, carbon nanohorns and the like are exemplified. Among these, the carbon material is preferably graphite, amorphous carbon, activated carbon, graphene, carbon black, a carbon fiber, a fullerene or a carbon nanotube and more preferably a carbon nanotube, carbon black or graphene.

As the carbon nanotube, a single-walled carbon nanotube (hereinafter, referred to as "SWCNT"), a double-walled carbon nanotube (hereinafter, referred to as "DWCNT") and a multi-walled carbon nanotube (hereinafter, referred to as "MWCNT") are exemplified.

The carbon material may have a heteroatom. As the heteroatom, an oxygen atom, a nitrogen atom, a phosphorus atom, a sulfur atom, a silicon atom and the like are exemplified. In a case where the carbon material has the heteroatom, the carbon material may include one kind of heteroatom alone or may include two or more kinds of heteroatoms. The carbon material may be oxidized, may be hydroxylated, may be nitrided, may be phosphided, may be sulfurized or may be silicified.

Examples of the metallic material include titanium and tin. In addition, examples of the metal oxide material include titanium oxides, tin oxides (SnO₂, ITO and ATO) and the like.

The conductive material may have a functional group such as a hydroxyl group, a carboxyl group, a nitrogen-containing group, a silicon-containing group, a phosphorus-containing group such as a phosphate group or a sulfur-containing group such as a sulfonate group. Particularly, the carbon material preferably has a carboxyl group. When the conductive material has a carboxyl group, it becomes easy for the metal complex to adsorb to the surface of the conductive material, the durability of the catalyst improves, and the oxygen reduction catalytic activity can be further enhanced.

On the conductive material, a surface treatment may be performed by an oxidation treatment. Particularly, when the oxidation treatment is performed on the carbon material such as carbon black, the interaction with the metal complex can be improved by imparting a hydrophilic functional group such as a carboxyl group or a hydroxyl group, and it becomes possible to control the ionization potential value to be within an optimal range. As a method for the oxidation treatment, a well-known method can be adopted, and it is possible to use a wet-type treatment in which the conductive material is stirred and mixed in an oxidant aqueous solution of nitric acid, sulfuric acid or hydrochloric acid or a gas-phase treatment such as a plasma treatment or an ozone treatment.

In a case where the conductive material contains a carboxyl group, the content of the carboxyl group is preferably 20 mass% or less, more preferably 15 mass% or less and still more preferably 10 mass% or less with respect to 100 mass% of the conductive material. When the content of the carboxyl group is the above-described upper limit or less, the production cost of the catalyst decreases, which is preferable. In addition, the content of the carboxyl group is preferably 1 mass% or more, more preferably 5 mass% or more and still more preferably 8 mass% or more. When the content of the carboxyl group is the above-described lower limit or more, it is possible to further enhance the durability and oxygen reduction catalytic activity of the catalyst. The content of the carboxyl group can be measured by element analysis, X-ray photoelectron spectroscopy or the like.

The specific surface area of the conductive material is preferably 0.8 m²/g or more, more preferably 10 m²/g or more, still more preferably 50 m²/g or more, particularly preferably 100 m²/g or more and most preferably 500 m²/g or more. When the specific surface area is 0.8 m²/g or more, it becomes easy to increase the amount of the catalyst supported, and the oxygen reduction catalytic activity of the catalyst can be further enhanced. The upper limit of the specific surface area is not particularly limited and can be set to, for example, 2000 m²/g. The specific surface area can be measured by the nitrogen adsorption BET method with a specific surface area measuring instrument.

The average grain diameter of the conductive material is not particularly limited, but is, for example, preferably 5 nm to 1000 µm, more preferably 10 nm to 100 µm and still more preferably 50 nm to 10 µm. As a method for adjusting the average grain diameter of the conductive material to the above-described numerical value range, the following (A1) to (A3) are exemplified.
(A1): A method in which the particles are pulverized with a ball mill or the like, the obtained coarse particles are dispersed in a dispersant to obtain desired particle diameters and the particles are dried and hardened.
(A2): A method in which the particles are pulverized with a ball mill or the like and the obtained coarse particles are sieved to sort particle diameters.
(A3): A method in which, upon the production of the conductive material, the production conditions are optimized and the grain diameters of the particles are adjusted.

The average particle diameter can be measured with a particle size distribution measuring instrument, an electron microscope or the like.

In the oxygen reduction catalyst of the present invention, the content of the metal complex is preferably 75 mass% or less, more preferably 50 mass% or less and still more preferably 30 mass% or less with respect to 100 mass% of the total amount of the metal complex and the conductive material. When the content of the metal complex is the above-described upper limit or less, the conductive property of the catalyst is excellent. In addition, the content of the metal complex is preferably 0.1 mass% or more, more preferably 0.5 mass% or more and still more preferably 1 mass% or more with respect to 100 mass% of the total amount of the metal complex and the conductive material. When the proportion of the metal complex is the above-described lower limit or more, it is possible to further enhance the oxygen reduction catalytic activity of the catalyst.

When the content of the metal complex is too high, the ionization potential value deviates from the preferable range and becomes close to the value of the metal complex alone, and the oxygen reduction performance of the catalyst deteriorates.

Conversely, when the content of the metal complex is too low, the ionization potential value becomes close to the value of the conductive material, and the oxygen reduction performance of the catalyst deteriorates.

Based on the value of the ionization potential of the composite of the conductive material and the metal complex, the optimal content of the metal complex can be selected.

The use of the oxygen reduction catalyst of the present invention is not particularly limited, but the oxygen reduction catalyst has an excellent oxygen reduction catalytic activity and thus can be used for oxygen reduction electrodes in air batteries, fuel cells and electrochemical sensors.

### [Liquid Composition]

In one embodiment, the present invention relates to a liquid composition containing the oxygen reduction catalyst of the present invention and a solvent. The solvent may be a solvent that easily dissolves the oxygen reduction catalyst (that is, has high solubility) or may be a solvent that does not easily dissolve the oxygen reduction catalyst (that is, has low solubility). In a case where the solvent easily dissolves the oxygen reduction catalyst, the liquid composition has a solution form. In a case where the solvent does not easily dissolve the oxygen reduction catalyst, the liquid composition has a dispersion liquid form.

The solvent is not particularly limited and may be an inorganic solvent such as water or may be an organic solvent. As specific examples of the organic solvent, alcohols such as methanol, ethanol, propanol, isopropanol (2-propanol) and 1-hexanol; dimethylsulfoxide; tetrahydrofuran; aprotic polar solvents such as N-methylpyrrolidone, dimethylformamide and acetone; and non-polar solvents such as chloroform, dichloromethane, 1,4-dioxane, benzene and toluene are exemplified. One kind of a solvent may be used singly or two or more kinds of solvents may be jointly used.

The liquid composition may contain, as arbitrary components, an arbitrary conductive agent, a binder and other additives. In addition, the liquid composition may contain a perfluorocarbon material including a structural unit based on polytetrafluoroethylene and a perfluoro side chain having a sulfonate group. As specific examples of the perfluorocarbon material, NATION (product name: manufactured by DuPont de Nemours, Inc.) is exemplified.

The liquid composition can be produced by mixing or kneading the oxygen reduction catalyst, the solvent and, if necessary, the perfluorocarbon material. For the mixing or kneading, an ultrasonic treatment, a mixer, a blender, a kneader, a homogenizer, a bead mill, a ball mill or the like may be used. The average particle diameter of the particles may be adjusted using a sieve or the like before and after the kneading operation. In addition, upon the preparation of the liquid composition containing the perfluorocarbon material, the oxygen reduction catalyst, the perfluorocarbon material and, if necessary, water and an alcohol may be mixed and stirred until the mixture becomes homogeneous.

The liquid composition can be applied to the surfaces of a variety of base materials. For example, a layer containing the oxygen reduction catalyst (hereinafter, referred to as "catalyst layer") can be provided on the surfaces of a variety of base materials by applying the liquid composition to the surfaces of the base materials and removing the solvent. That is, the liquid composition can be used as a coating liquid that is applied to the surfaces of base materials when, for example, electrodes are produced. The liquid composition may be used as a coating liquid as it is or may be used as a coating liquid after the content or solid solution concentration of the oxygen reduction catalyst is adjusted.

The base material is not particularly limited, and an aluminum foil, an electrolytic aluminum foil, an aluminum mesh (expanded metal), foamed aluminum, punched aluminum, an aluminum alloy such as duralumin, a copper foil, an electrolytic copper foil, a copper mesh (expanded metal), foamed copper, punched copper, a copper alloy such as brass, a brass foil, a brass mesh (expanded metal), foamed brass, punched brass, a nickel foil, a nickel mesh, corrosion-resistant nickel, a nickel mesh (expanded metal), punched nickel, foamed nickel, sponge nickel, metal zinc, corrosion-resistant metal zinc, a zinc foil, a zinc mesh (expanded metal), a steel plate, a punched steel plate, silver and the like are exemplified. In addition, it is also possible to use a substrate-like base material such as a silicon substrate; a metal substrate of gold, iron, stainless steel, copper, aluminum, or lithium; an alloy substrate containing an arbitrary combination of these metals; an oxide substrate of indium tin oxide (ITO), indium zinc oxide (IZO) or antimony tin oxide (ATO); or a carbon substrate of glassy carbon, pyrolytic graphite or carbon felt.

### [Electrode]

In one embodiment, the present invention relates to an electrode containing the oxygen reduction catalyst of the present invention. The electrode may include a layer containing the oxygen reduction catalyst of the present invention (that is, a catalyst layer) on the above-described base material and can be used as a catalyst for an oxygen reduction reaction. The catalyst layer may be in direct contact with the base material or another layer may be present between the base material and the catalyst layer.

A method for producing the electrode is not particularly limited, and the electrode may be produced by, for example, applying the liquid composition to the surface of a conductive base material and removing components other than the oxygen reduction catalyst. Upon the removal of the components other than the oxygen reduction catalyst, the liquid composition may be heated and dried or may be pressed after dried. In addition, the catalyst layer may be provided on the surface of the base material by vacuum deposition or the like. The electrode may have the catalyst layer on only one surface of the base material or may have the catalyst layers on both surfaces of the base material.

The thickness of the catalyst layer is not particularly limited and can be set to, for example, 0.01 to 100 µm. When the thickness is the above-described lower limit or more, the durability of the electrode is excellent. When the thickness is the above-described upper limit or less, the performance of the electrode is less likely to deteriorate.

The electrode has a function as a catalyst for an oxygen reduction reaction and has a function as a catalyst for reduction reactions shown below.

O₂ + 4H⁺ + 4e⁻ → 2H₂O

O₂ + 2H₂O + 4e⁻ → 4OH⁻

### [Air Battery]

In one embodiment, the present invention relates to an air battery provided with the electrode of the present invention. The electrode of the present invention can be used as an oxygen electrode of the air battery. The air battery may include the oxygen electrode, a metal electrode, an electrolyte and a separator. The oxygen electrode in the present invention is an electrode containing gaseous oxygen as an electrode active material and is also referred to as an air electrode.

The metal electrode is not particularly limited, and pure metals such as aluminum, magnesium, calcium, lithium and zine and metal oxides thereof are exemplified.

The electrolyte is preferably an aqueous electrolyte and is not particularly limited, and alkali aqueous solution such as a potassium hydroxide aqueous solution and a sodium hydroxide aqueous solution and acidic aqueous solutions such as a sulfuric acid aqueous solution are exemplified. One kind of an electrolyte may be used or two or more kinds of electrolytes may be jointly used. In addition, it is also possible to use an inorganic solid electrolyte.

The separator is a member that isolates the oxygen electrode and the metal electrode and holds the electrolyte to ensure the ion conductive property between the oxygen electrode and the metal electrode. The separator is not particularly limited, and polymers having micropores such as polyethylene, polypropylene, polytetrafluoroethylene, polyvinylidene fluoride, cellulose, cellulose acetate, hydroxyalkylcellulose, carboxymethyl cellulose, polyvinyl alcohol, cellophane, polystyrene, polyacrylonitrile, polyacrylamide, polyvinyl chloride, polyimide, polyamide, vinylon and poly(meth)acrylic acid, a gel compound, an ion-exchange membrane, a cyclized polymers, a poly(meth)acrylate-containing polymer, a sulfonate-containing polymer, a quaternary ammonium salt-containing polymer, a quaternary phosphonium salt-containing polymer and the like are exemplified. The separator may be a non-porous membrane or a porous membrane, and, in the case of a porous membrane, the pore diameters are preferably 10 µm or smaller.

### [Fuel Cell]

In one embodiment, the present invention relates to a fuel cell provided with the electrode of the present invention. The electrode of the present invention can be used as an oxygen electrode of the fuel cell. The fuel cell may include the oxygen electrode, a fuel electrode, an electrolyte and a separator.

As the fuel electrode, the electrolyte and the separator that are used in the fuel cell, those exemplified as the metal electrode, the electrolyte and the separator that are used in the air battery can be each used.

The fuel cell may be a primary cell or a secondary cell. As the form of the fuel cell, a metal-air cell, a molten carbonate fuel cell (MCFC), a phosphoric acid fuel cell (PAFC), a solid oxide fuel cell (SOFC), a polymer electrolyte fuel cell (PEFC), an enzyme (bio) fuel cell, a microbial fuel cell, a hydrazine fuel cell, a direct methanol fuel cell (DMFC) and the like are exemplified. The form of the fuel cell is not limited to these exemplifications, but PEFC, an enzyme (bio) fuel cell, a microbial fuel cell, a hydrazine fuel cell or DMFC is preferable. As the secondary cell, a hydrogen-air secondary cell in which a hydrogen absorbing alloy is used as a negative electrode is exemplified.

### [Selection Method of Oxygen Reduction Catalyst]

In one embodiment, the present invention relates to a selection method of an oxygen reduction catalyst including a step of selecting a catalyst containing a metal complex and a conductive material and having an ionization potential value of 5.80 eV or lower by measuring the ionization potential value of the oxygen reduction catalyst. The oxygen reduction catalyst of the present invention is particularly useful as oxygen reduction catalysts for air batteries or fuel cells, in particular, oxygen reduction catalysts for electrodes, and the use of an electrode containing the oxygen reduction catalyst of the present invention as an oxygen electrode makes it possible to produce air batteries or fuel cells having excellent performance. As the oxygen reduction catalyst, the liquid composition, the electrode, the air battery and the fuel cell, the above-described ones can be used.

In the selection method of the oxygen reduction catalyst of the present invention, the ionization potential value of the oxygen reduction catalyst as a whole is measured. Specifically, the ionization potential value is measured not from the main component of the catalyst alone but from the composite, which is the combination of the main component with the conductive material, the promotor and the like, which makes it possible to effectively investigate the usefulness as oxygen reduction catalysts. For example, in the case of using the oxygen reduction catalyst of the present invention in which the metal complex is used, even when the ionization potential value of the metal complex alone is measured, a meaningful correlation between the ionization potential value and the performance as oxygen reduction catalysts is not recognized. However, the ionization potential value of the catalyst in which the metal complex forms a composite with the conductive material extremely well correlates with performances as oxygen reduction catalysts. Therefore, it is possible to select an appropriate oxygen reduction catalyst by measuring the ionization potential value of the catalyst without investigating the oxygen reduction catalytic activity.

An oxygen reduction catalyst selected according to the selection method of an oxygen reduction catalyst of the present invention can have an excellent oxygen reduction catalytic activity and is capable of satisfying performance that is demanded as a catalyst in oxygen electrodes in air batteries or fuel cells.

### [Examples]

Hereinafter, the present invention will be more specifically described using examples and comparative examples, but the scope of the present invention is not limited to the examples.

### <Example 1>

410 mg of anhydrous iron (III) chloride and 5 mL of 1-pentanol were added to 1.29 g of pyridine-3,4-dicarbonitrile, 1.52 g of 1,8-diazabicyclo[5.4.0]undec-7-ene was added thereto, and the components were heated in an oil bath set to 160°C. After three hours, 20 mL of N,N-dimethylformamide was added thereto and further heated for one hour. After cooling, 20 mL of methanol was added thereto, and a precipitated solid was filtered. This solid was washed with methanol and dried, thereby obtaining a compound (1) that was a reaction product having the following formula: 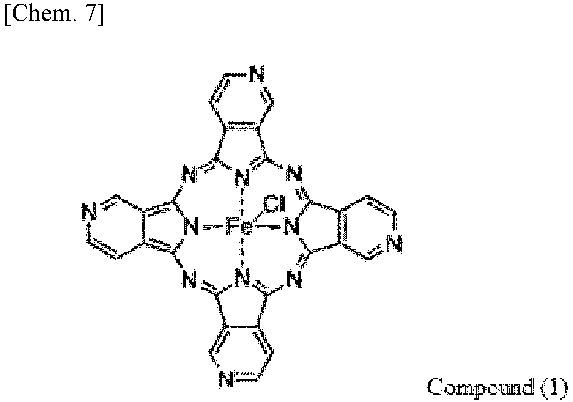 (yield: 920 mg).

The reaction product was centrifuged with acetone three times and dried. A deposit after the centrifugation was dissolved in concentrated sulfuric acid, water was added dropwise thereto, and a compound (1) was precipitated. The precipitated compound (1) was collected by centrifugation and washed with methanol, thereby obtaining a compound (1). Next, 0.1 mg of the obtained compound (1) was dissolved in 1.0 mL of dimethylsulfoxide (DMSO), and a solution in which the concentration of a compound (1) was 0.1 g/L was prepared. 5 mg of carbon black having a carboxyl group was dispersed in the obtained solution. The carbon black was dispersed by performing an ultrasonic treatment (20 kHz) for 15 minutes. An obtained dispersion liquid was separated into solid and liquid, washed with methanol to remove DMSO, which was a solvent, and dried at room temperature for 24 hours, thereby obtaining a catalyst of Example 1.

Next, 0.82 mg of the obtained catalyst of Example 1, 84 µL of Milli-Q water, 336 µL of isopropyl alcohol and 6 µL of a 0.5 mass% NAFION aqueous solution were kneaded with an ultrasonic kneader and applied to a GC electrode, thereby obtaining an electrode of Example 1.

### (Ionization Potential Value)

As ionization potential values, the value of a metal complex alone, which was the main component of the catalyst, and the value of the catalyst supported by carbon black by the above-described method were each measured. In the measurement of the ionization potential values, photoemission yield spectroscopy in air AC-3 manufactured by Riken Keiki Co., Ltd. was used.

### (Half-Wave Potential)

In a linear sweep voltammetry (LSV) curve, a potential when the current value reached half the current value when the potential was 0.5 (V vs. RHE) was defined as the half-wave potential.

### (LSV Curve)

The LSV curve was acquired using an oxygen-saturated 0.1 M potassium hydroxide aqueous solution as an electrolytic solution with a rotating ring-disk electrode (manufactured by BAS Inc., RRDE-3A) under a condition of a sweep rate of 5 mV/s. The rotation speed of the rotating disk was set to 1600 rpm, a Pt wire was used as a counter electrode, and Ag/AgCl was used as a reference electrode.

### (LSV Measurement with RRDE)

LSV measurement with RRDE was performed with the rotating ring-disk electrode (manufactured by BAS Inc., RRDE-3A) using the oxygen-saturated 0.1 M potassium hydroxide aqueous solution as an electrolytic solution under a condition of a sweep rate of 5 mV/s. LSV was measured with the rotation speed of the rotating disk set to each rotation speed of 0 rpm, 400 rpm, 800 rpm, 1200 rpm, 1600 rpm, 2000 rpm and 2400 rpm. Pt was used as the counter electrode, and Ag/AgCl was used as the reference electrode.

In a graph showing the results of LSV measurement with RRDE, as the applied potential indicated along the horizontal axis when the current indicated along the vertical axis begins to be generated (starting potential) becomes higher, it means that the oxygen reduction catalytic activity becomes superior.

### <Examples 2 to 7 and Comparative Examples 1 and 2>

The ionization potential values, the starting potentials and the half-wave potentials were measured under the same conditions as in Example 1 except that the metal complex (compound (1)) in Example 1 was changed to each of metal complexes shown in Table 1 below. A compound of Comparative Example 1 has the following structure.

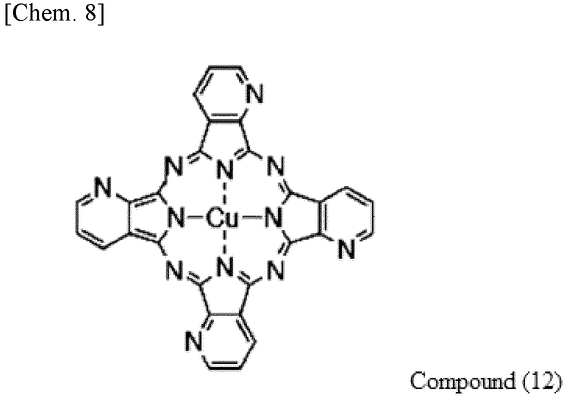

The measurement results are shown in Table 1.

### [Table 1]

**Table 1 Starting potentials, half-wave potentials and ionization potential values of Examples and Comparative Examples**

| | | Example 1 | Example 2 | Example 3 | Example 4 | Example 5 | Comparative Example 1 |
|---|---|---|---|---|---|---|---|
| Metal complex | | Compound (1) | Compound (7) | Compound (8) | Compound (9) | Compound (10) | Compound (12) |
| Starting potential | Vvs. RHE | 1.000 | 1.010 | 1.100 | 0.995 | 1.000 | 0.860 |
| Half-wave potential | Vvs. RHE | 0.906 | 0.922 | 0.928 | 0.923 | 0.919 | 0.685 |
| Ionization potential value (metal complex + carbon black) | eV | 5.38 | 4.95 | 4.98 | 5.58 | 5.11 | 5.98 |
| Ionization potential value (metal complex alone) | eV | 5.90 | 5.65 | 5.77 | 500 | 6.03 | 600 |

A graph of the results of the LSV measurement performed on Examples 1 and 3 and Comparative Example 1 with RRDE is shown in FIG. 1. From the results shown in Table 1 and by the graph of FIG. 1, it is found that the oxygen reduction catalyst of the present invention having an ionization potential value of 5.80 eV or lower had a high starting potential and an excellent oxygen reduction catalytic activity. In addition, it has been clarified that, even when the ionization potential value of the metal complex alone exceeds 5.80 eV, if the ionization potential value of the oxygen reduction catalyst is 5.80 eV or lower, a desired oxygen reduction catalytic activity can be obtained.

### [Industrial Applicability]

The oxygen reduction catalyst of the present invention has an excellent oxygen reduction catalytic activity in the case of being used as a catalyst for oxygen electrodes in air batteries or fuel cells and is thus useful. In addition, an excellent oxygen reduction catalyst can be easily selected by investigating ionization potential values. Furthermore, since rare metals are not used, it is possible to suppress the production cost and to design production steps suitable for mass production.

## Claims

1. An oxygen reduction catalyst containing a metal complex and a conductive material and having an ionization potential value of 5.80 eV or lower.

2. The oxygen reduction catalyst according to Claim 1,
wherein the metal complex is represented by the following formula (1) or (2): 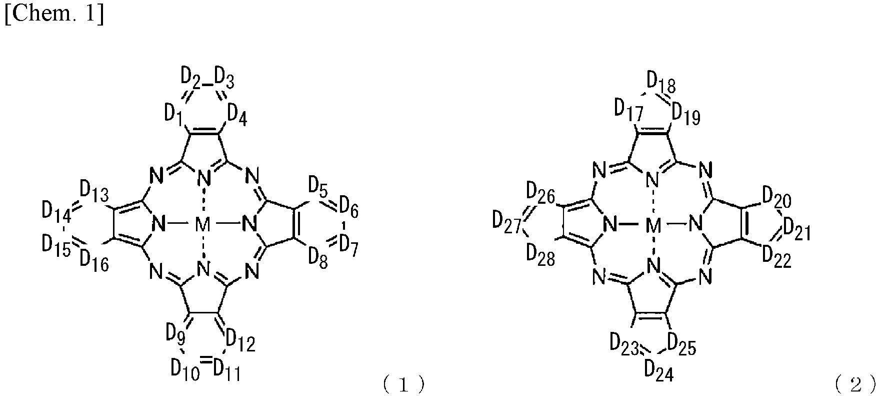 (in the formulae,
M is a metal atom,
D¹ to D²⁸ are each independently a nitrogen atom, a sulfur atom or a carbon atom, and,
in a case where D¹ to D²⁸ are carbon atoms, to each of the carbon atoms, a hydrogen atom, a halogen atom, an alkyl group, a cycloalkyl group, an alkenyl group, an alkynyl group, an aryl group, an alkylsulfonyl group, an alkoxy group or an alkylthio group may bond independently).

3. The oxygen reduction catalyst according to Claim 2,
wherein the M is a manganese atom, an iron atom, a cobalt atom, a nickel atom, a copper atom or a zinc atom.

4. The oxygen reduction catalyst according to Claim 2 or 3,
wherein D¹ to D¹⁶ are nitrogen atoms or carbon atoms.

5. The oxygen reduction catalyst according to any one of Claims 2 to 4, wherein D¹⁷ to D²⁸ are sulfur atoms or carbon atoms.

6. The oxygen reduction catalyst according to any one of Claims 2 to 5 that is represented by the following formulae:

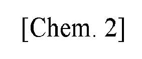

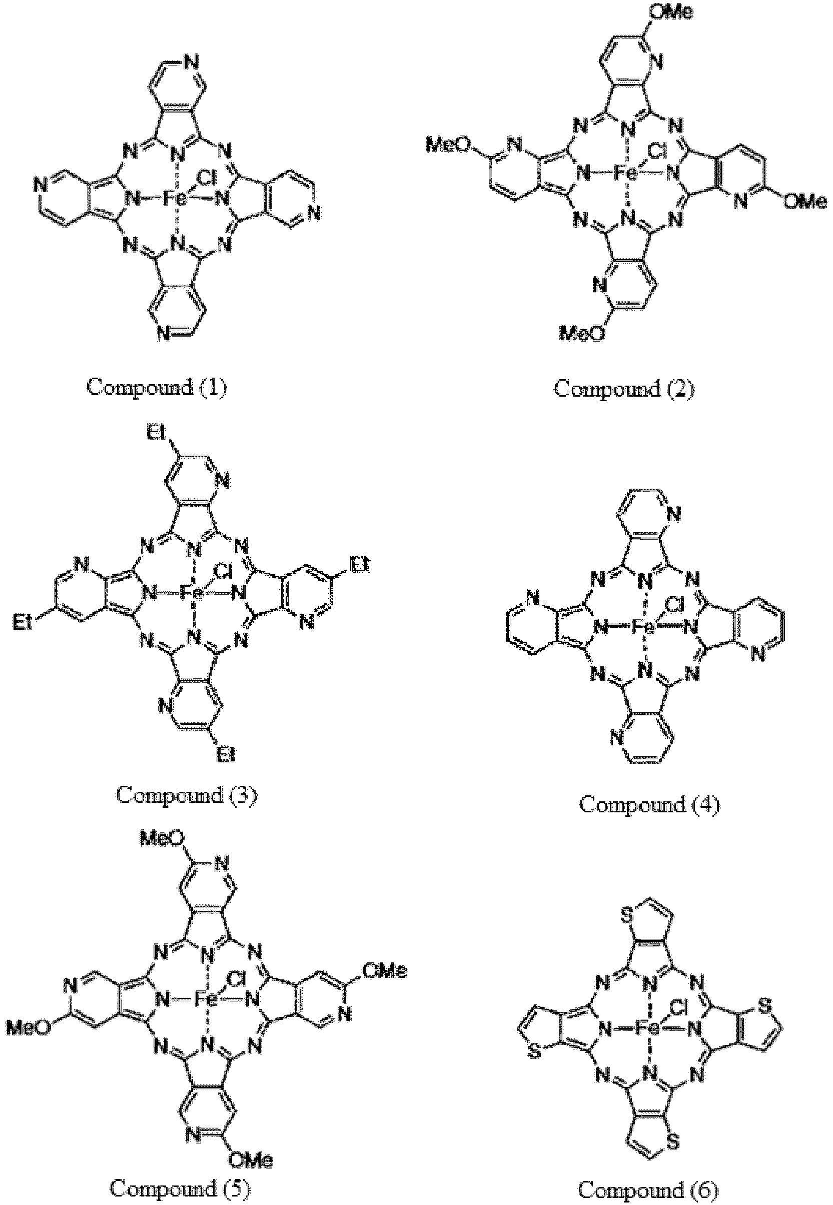

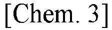

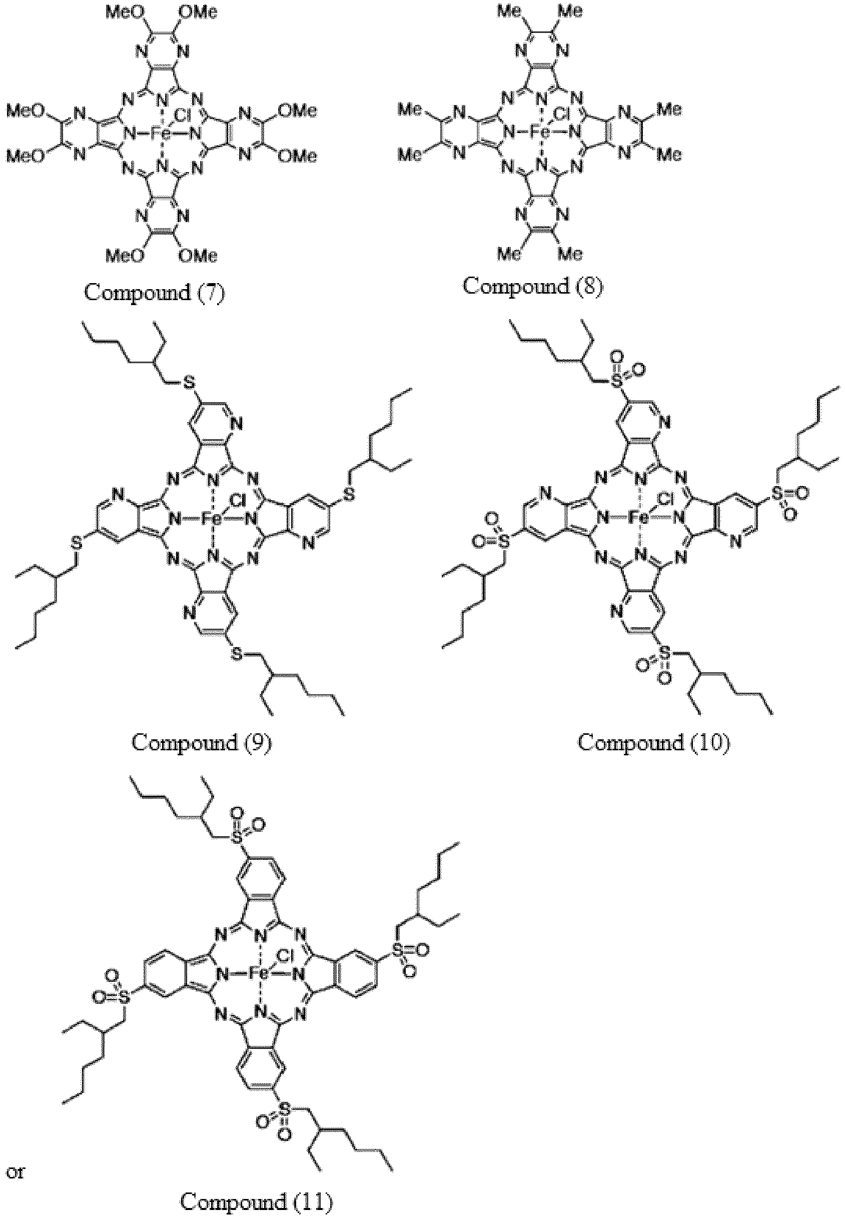

7. The oxygen reduction catalyst according to any one of Claims 1 to 6,
wherein the metal complex is contained in an amount of 75 mass% or less with respect to 100 mass% of a total amount of the metal complex and the conductive material.

8. The oxygen reduction catalyst according to any one of Claims 1 to 7,
wherein the conductive material is a carbon material.

9. The oxygen reduction catalyst according to any one of Claims 1 to 8,
wherein the conductive material contains a carboxyl group.

10. The oxygen reduction catalyst according to Claim 9,
wherein 20 mass% or less of the carboxyl group is contained in 100 mass% of the conductive material.

11. The oxygen reduction catalyst according to any one of Claims 1 to 10 that has an ionization potential value of 4.80 eV or higher.

12. A liquid composition comprising:
the oxygen reduction catalyst according to any one of Claims 1 to 11; and
a solvent.

13. An electrode comprising:
the oxygen reduction catalyst according to any one of Claims 1 to 11.

14. An air battery or fuel cell comprising the electrode according to Claim 13.

15. A selection method of an oxygen reduction catalyst comprising:
a step of selecting a catalyst containing a metal complex and a conductive material and having an ionization potential value of 5.80 eV or lower by measuring an ionization potential value of the oxygen reduction catalyst.

16. The selection method of an oxygen reduction catalyst according to Claim 15,
wherein the oxygen reduction catalyst is the oxygen reduction catalyst according to any one of Claims 1 to 9.

17. The selection method of an oxygen reduction catalyst according to Claim 15 or 16,
wherein the oxygen reduction catalyst is an oxygen reduction catalyst for an air battery or a fuel cell.
